# EUROPÄISCHE PATENTANMELDUNG

(11) **EP 0 895 212 A2**
(43) Veröffentlichungstag der Anmeldung: **03.02.1999**
(21) Anmeldenummer: 98107565.8
(22) Anmeldetag: 23.04.1998
(51) Int. Cl.: G08G 1/017, B64D 11/00

(54) **Rollwagen mit einem Transponder**

(30) Priorität: 29.07.1997 DE 19732597
(71) Anmelder: Stobbe, Anatoli, 30890 Barsinghausen (DE)
(72) Erfinder: Stobbe, Anatoli, 30890 Barsinghausen (DE)
(74) Vertreter: Patentanwälte Thömen & Körner

(57) **Zusammenfassung**

Die Erfindung beschreibt einen Rollwagen, bestehend aus einem metallenen Behälter, an dessen Boden Laufrollen sowie mindestens eine Bremsvorrichtung vorgesehen sind, wobei der Boden zwischen den auf gegenüberliegenden Seiten befindlichen Laufrollen einen Auflagebereich zum Aufsetzen des Rollwagens auf ein Transportband aufweist. Unten am Rollwagen ist ein Transponder angeordnet, und die Erfindung schlägt vor, den Transponder an einem Abstandshalter aus Kunststoff im Abstand vom Boden des Rollwagens zu befestigen, wobei sich der Transponder außerhalb des Auflagebereiches des Bodens des Rollwagens befindet. Dadurch verringert sich der Abstand zwischen dem Transponder und dem Fußboden, in welchem die Antenne eines Lesegerätes verlegt ist.

## Beschreibung

Die Erfindung betrifft einen Rollwagen gemäß dem Oberbegriff des Patentanspruchs 1.

Derartige Rollwagen dienen als Transportbehälter und werden vorzugsweise als sogenannte "Catering Trolleys" in Flugzeugen zur Verpflegung der Passagiere mit Lebensmitteln und Getränken eingesetzt. Die Rollwagen sind robust aufgebaut und besitzen einen Behälter zur Aufnahme der Verpflegung. Normalerweise besteht der gesamte Behälter aus Metall, zumindest aber der Boden des Behälters, an dem sich an der Vorder- und Hinterseite jeweils Laufrollen befinden, um den Rollwagen leicht bewegen zu können. Ferner sind die Rollwagen mit einer Bremsvorrichtung ausgestattet, durch welche die Laufrollen blockiert werden können, so daß der Rollwagen dann stehen bleibt und nicht mehr bewegt werden kann. Die Bremsvorrichtung wird von der Bedienungsperson betätigt, wenn Lebensmittel oder Getränke aus dem Behälter entnommen und einem Passagier überreicht werden.

Die bekannten Rollwagen besitzen unten einen Transponder, der einen Speicher besitzt und der in der Lage ist, Daten sowohl zu empfangen als auch zu senden. In dem Speicher befinden sich solche Daten, die dem betreffenden Rollwagen zugeordnet sind und ihn identifizieren. Der Transponder besitzt üblicherweise keine eigene Energiequelle. Vielmehr erhält er die für seinen Betrieb erforderliche Energie aus dem Hochfrequenzfeld eines Lesegerätes, sobald der Transponder in den Einflußbereich dieses Lesegerätes gelangt.

Wenn ein Flugzeug mit solchen Rollwagen auf einem Flugplatz gelandet ist, werden die Rollwagen aus dem Flugzeug entladen und gelangen dann in den Flughafenbereich. Dort werden sie gereinigt und gewaschen, und anschließend erfolgt eine Kontrolle, ob der betreffende Rollwagen ohne weiteres wieder verwendet werden kann, oder ob gegebenenfalls Reparaturarbeiten erforderlich sind.

Wenn sich keine Beanstandungen ergeben, wird der gewaschene Rollwagen in eine Sammelzone zum Auffüllen mit neuer Verpflegung überführt, während der Rollwagen im anderen Fall zur Reparatur in einen Reparaturbereich überführt wird. Nach erfolgter Reparatur wird der Rollwagen dann ebenfalls in die Sammelzone gebracht. Für den Fall, daß eine Reparatur nicht mehr möglich ist, wird der Rollwagen als unbrauchbar ausgemustert. Die in der erwähnten Sammelzone befindlichen Rollwagen werden mit Lebensmitteln und Getränken aufgefüllt und verlassen dann den Flughafenbereich, um in das betreffende Flugzeug gebracht zu werden. Der soweit beschriebene Ablauf ist in unmittelbarem Zusammenhang mit den jedem Rollwagen zugeordneten Transpondern zu sehen.

An den Stellen, an denen der Rollwagen in die voranstehend beschriebenen Bereiche bzw. Zonen eindringt bzw. diese verläßt, befindet sich im Fußboden eine als Antenne dienende Spule/Induktivität eines Lesegerätes. Wenn daher ein Rollwagen über das Lesegerät hinwegrollt, erfolgt automatisch und drahtlos ein Datenaustausch zwischen dem Transponder und dem Lesegerät, und auf diese Weise ist es möglich, in einer mit allen Lesegeräten verbundenen Zentrale den jeweiligen Aufenthaltsort jedes Transponders zu erfassen. Wenn ein Rollwagen repariert wird, kann die Art der Reparatur in den Speicher des Transponders eingegeben werden, so daß sich auch jederzeit feststellen läßt, wie oft ein Rollwagen repariert wurde, und welcher Art die jeweilige Reparatur war. Die Auswertung der entsprechenden Daten läßt beispielsweise auch Rückschlüsse darauf zu, an welchen Stellen der Rollwagen besonders reparaturanfällig ist und wo demzufolge Verbesserungen vorzunehmen sind.

Wenn ein Rollwagen verloren gehen sollte, läßt sich mit Hilfe des beschriebenen Systems auch feststellen, in welchem Bereich bzw. in welcher Zone sich der Transponder zuletzt befunden hat. Neben den soweit beschriebenen Möglichkeiten gibt es noch vielfältige andere Auswertungen, welche die Verwendung des Transponders an einem Rollwagen so vorteilhaft machen.

Ein wichtiger Gesichtspunkt für die Arbeitsweise des Transponders ist der Abstand zur im Fußboden verlegten Antenne des Lesegerätes. Um ausreichend Energie zur Spule des Transponders übertragen zu können, und um die vom Transponder gesendeten Daten empfangen zu können, soll dieser Abstand möglichst gering sein. Bei den bekannten Rollwagen befindet sich der Transponder im Boden des metallenen Behälters, und der Abstand zwischen dem Behälterboden und dem Fußboden ist durch die Laufrollen des Rollwagens vorgegeben und beträgt etwa 10 cm.

Die äußeren Abmessungen eines Transponders werden hauptsächlich von seiner Spule für die induktive Übertragung bestimmt, so daß sich die Transponder nicht beliebig klein aufbauen lassen. Außerdem muß berücksichtigt werden, daß zumindest der Boden des Rollwagens aus Metall besteht und der Transponder somit weitgehend von Metall umgeben ist, wodurch die Sende- und Empfangsleistung des Transponders erheblich geschmälert wird, weil das Metall einen Teil der HF-Energie absorbiert.

Um dennoch eine sichere Datenübertragung zwischen dem Lesegerät und dem Transponder zu gewährleisten, sind daher vergleichsweise große Transponder mit großen Spulen erforderlich, und bei bekannten Transpondern liegen die Abmessungen des Transpondergehäuses bei etwa 10 mm Höhe, 27 mm Breite und 67 mm Länge.

Bei der Anordnung des Transponders am Boden des Rollwagens ist folgendes zu beachten. Bei der eingangs beschriebenen automatischen Wäsche der Rollwagen oder auch bei der Überführung in die Sammelzone zum Auffüllen des Rollwagens mit neuer Verpflegung sowie während des Auffüllens selbst werden die Rollwagen auf Transportbänder aufgesetzt, welche die Rollwagen zu den einzelnen Stationen transportieren. Dabei liegt der Boden des Rollwagens auf dem Transportband, während sich die Laufrollen seitlich des Transportbandes befinden. Der Bereich, mit welchem der Boden auf dem Transportband liegt, wird als Auflagebereich bezeichnet, und dieser Auflagebereich muß absolut glatt sein und unterliegt zudem der Beanspruchung durch das Transportband und durch das Gewicht des Rollwagens.

Bei den bekannten Rollwagen ist daher der Transponder in die Fläche des Bodens in eine Vertiefung eingelassen, um eine glatte Bodenfläche zu erzielen, und um den Transponder, der sich innerhalb des Auflagebereiches befindet, zu schützen, wenn der Rollwagen auf das Transportband aufgesetzt worden ist.

Ein Nachteil bei den bekannten Rollwagen besteht darin, daß der Transponder wegen des vergleichsweise großen Abstandes zum Fußboden und des darin befindlichen Lesegerätes eine große Spule besitzen muß und somit insgesamt große Abmessungen aufweist, wodurch der Preis des Transponders hoch ist. Die großen Abmessungen haben zur Folge, daß der Transponder innerhalb des Auflagebereiches angeordnet werden muß.

Weitere Kosten entstehen dadurch, daß der Transponder sich im Auflagebereich des Bodens des Rollwagens befindet, und der Boden an dieser Stelle besonders ausgebildet werden muß, um den Transponder vor dem Transportband zu schützen. Wegen des vorgegebenen Abstandes zwischen dem Transponder und der im Fußboden verlegten Antenne des Lesegerätes muß schließlich auch die Leistung des Lesegerätes entsprechend groß sein, was sich ebenfalls auf die Kosten auswirkt.

Der Erfindung liegt die Aufgabe zugrunde, den Rollwagen sowie den Transponder und das Lesegerät preisgünstiger gestalten zu können, wobei gleichwohl eine sichere Datenübertragung zwischen Transponder und Lesegerät gewährleistet ist. Die Lösung dieser Aufgabe erfolgt durch die im Patentanspruch 1 angegebenen Merkmale.

Bei den erfindungsgemäßen Rollwagen befindet sich der Transponder an einem Abstandshalter aus Kunststoff nicht im Boden des Rollwagens, sondern im Abstand vom Boden, und außerdem ist der Transponder außerhalb des Auflagebereiches des Bodens des Rollwagens angeordnet.

Da der Transponder an einem Abstandshalter im Abstand vom Boden des Rollwagens befestigt ist, ist der Abstand zwischen dem Transponder bzw. dessen Spule und dem Fußboden wesentlich geringer. Daher läßt sich eine sichere Datenübertragung zwischen Transponder und Lesegerät mit weitaus weniger Energie erreichen. Dies hat zur Folge, daß die Spule des Transponders kleiner gewählt werden kann, und daß die Abmessungen des Transponders insgesamt ebenfalls kleiner sind. Auch das Lesegerät braucht nicht so leistungsstark ausgelegt zu werden, und beides zusammen führt zu Kostenvorteilen.

Da die Abmessungen des Transponders nunmehr verringert sind und der Transponder kleiner ausgebildet ist, kann der Transponder innerhalb der kleinen Zone angeordnet werden, die auf dem Boden neben dem Auflagebereich des Bodens des Rollwagens verbleibt.

Da sich der Transponder im Abstand vom metallenen Boden des Rollwagens befindet, ist auch die beim Stand der Technik nachteilige Absorbtion von HF-Energie durch den Metallboden entscheidend verringert. Somit trägt auch dieses Merkmal dazu bei, daß mit wesentlich weniger HF-Energie beim Betrieb des Transponders gearbeitet werden kann, wobei dennoch eine sichere und störungsfreie Datenübertragung zwischen Transponder und dem Lesegerät erfolgt. Sowohl der geringere Abstand zum Fußboden, als auch der durch den Abstandshalter geschaffene Abstand zum metallenen Boden des Rollwagens ermöglichen somit den Aufbau und die Verwendung kleiner Transponder und energiesparender Lesegeräte. Da sich der Transponder außerhalb des Auflagebereiches des Bodens des Rollwagens befindet, kann dieser nach wie vor problemlos auf ein Transportband aufgesetzt werden, ohne daß der Auflagebereich besonders ausgestaltet sein muß.

In zweckmäßiger Ausgestaltung der Erfindung ist der Abstandshalter selbst am Boden des Rollwagens außerhalb des Auflagebereiches befestigt, jedoch ist es in einer vorteilhaften Weiterbildung der Erfindung auch möglich, den Transponder mit dem Abstandshalter an der metallenen Bremsvorrichtung des Rollwagens zu befestigen. In diesem Fall bildet die Bremsvorrichtung praktisch einen Teil des Abstandshalters, da sich die Bremsvorrichtung vom Boden des Rollwagens nach unten hin weg erstreckt. Dabei kann der Transponder in bevorzugterweise entweder an einem Pedal der Bremsvorrichtung oder an der Halterung der Bremsvorrichtung angeordnet werden.

In einer weiteren vorteilhaften Ausgestaltung der Erfindung besteht die Bremsvorrichtung selbst aus Kunststoff und bildet gleichzeitig den Abstandshalter für den Transponder, der entweder an einem Pedal der Kunststoff-Bremsvorrichtung oder an der Halterung der Bremsvorrichtung befestigt ist.

Gemäß einer weiteren Ausgestaltung der Erfindung ist der Transponder als kleine runde Scheibe ausgebildet, wobei der Durchmesser etwa 30 mm und die Höhe etwa 10 mm beträgt. Diese Zahlen verdeutlichen, daß der Transponder wesentlich kleiner als beim Stand der Technik ausgebildet sein kann.

Der Transponder umfaßt ein nach einer Seite hin offenes Gehäuse aus Kunststoff, in welches die Spule und die weiteren elektrischen Komponenten des Transponders eingebracht sind. Anschließend wird das Gehäuse von der offenen Seite her mit einer Vergußmasse vergossen.

Gemäß einer weiteren zweckmäßigen Ausgestaltung der Erfindung ist vorgesehen, auf das Transpondergehäuse zu verzichten und stattdessen in dem aus Kunststoff bestehenden Abstandshalter selbst bzw. in dem Pedal oder der Halterung der Kunststoff-Bremsvorrichtung eine dem Gehäuse entsprechende Öffnung vorzusehen und in diese Öffnung die elektrischen Komponenten und die Spule des Transponders anzuordnen. Anschließend wird die Öffnung dann mit einer Vergußmasse vergossen. Somit ist der Transponder ein integrierter Bestandteil des Abstandshalters bzw. der Bremsvorrichtung.

Weitere zweckmäßige Ausgestaltungen der Erfindung sind in den Unteransprüchen angegeben.

Anhand der in der Zeichnung dargestellten Ausführungsbeispiele wird die Erfindung nachfolgend näher erläutert. Es zeigen:
- Fig. 1: eine perspektivische Darstellung eines Rollwagens von unten, und
- Fig. 2 u.3: jeweils Teil-Seitenansichten eines Rollwagens gemäß unterschiedlichen Ausführungsbeispielen der Erfindung.

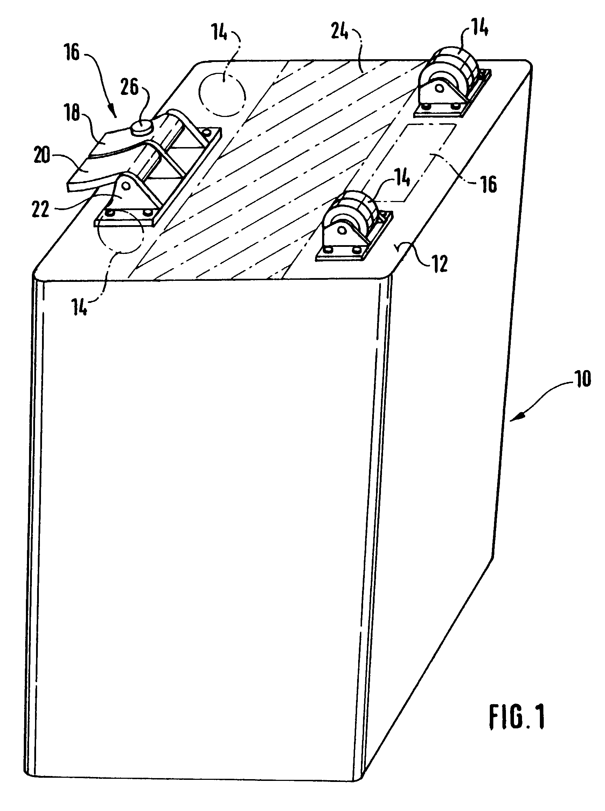

Fig. 1 zeigt in der Ansicht von unten einen Rollwagen 10 mit einem metallenen Boden 12 sowie Laufrollen 14. In der Zeichnung sind nur die beiden rechten Laufrollen 14 dargestellt, während aus Gründen der besseren Übersichtlichkeit der Zeichnung die linken Laufrollen 14 nur durch gestrichelt gezeichnete Kreise angedeutet sind.

An jeder Seite des Bodens 12 befindet sich eine Bremsvorrichtung 16, wobei in Fig. 1 lediglich die linke Bremsvorrichtung 16 komplett dargestellt ist, während zur Vereinfachung die rechte Bremsvorrichtung durch ein gestrichelt gezeichnetes Rechteck angedeutet ist. Die Bremsvorrichtung 16 umfaßt zwei Pedale 18 und 20, die in einer Halterung 22 angeordnet sind, und die beim Betrieb des Rollwagens von der Bedienungsperson mit dem Fuß betätigt werden können. Mit dem einen Pedal 18 lassen sich die Laufrollen 14 über eine nicht näher dargestellte Mechanik blockieren, während die Laufrollen 14 durch Betätigung des anderen Pedals 20 wieder freigegeben werden können.

Der Boden 12 des Rollwagens 10 besitzt einen schraffiert dargestellten Auflagebereich 24, der den größten Teil der Bodenfläche einnimmt. Mit diesem Auflagebereich 24 liegt der Rollwagen 10 bzw. die Fläche des Bodens 12 auf einem Transportband, wenn der Rollwagen 10 beispielsweise zu einer Waschanlage zum Zwecke der Reinigung oder auch zu einer Sammelzone zum Zwecke der Befüllung des Rollwagens mit Verpflegung transportiert wird. Zu beiden Seiten des Transportbandes hängen die Laufrollen 14 sowie die Bremsvorrichtungen 16 herunter, die sich außerhalb des Auflagebereiches 24 befinden.

In dem Ausführungsbeispiel gemäß Fig. 1 besteht die Bremsvorrichtung 16 aus Kunststoff, und auf der dem Boden 12 abgewandten Seite des Pedals 18 ist ein Transponder 26 befestigt. Die Bremsvorrichtung 16 dient somit als Abstandshalter für den Transponder 26, der sich nicht in der Ebene des Bodens 12, sondern im Abstand davon befindet. Da der Transponder vergleichsweise kleine Abmessungen besitzt, ist es möglich, ihn außerhalb des Auflagebereiches 24 des Bodens 12 anzuordnen.

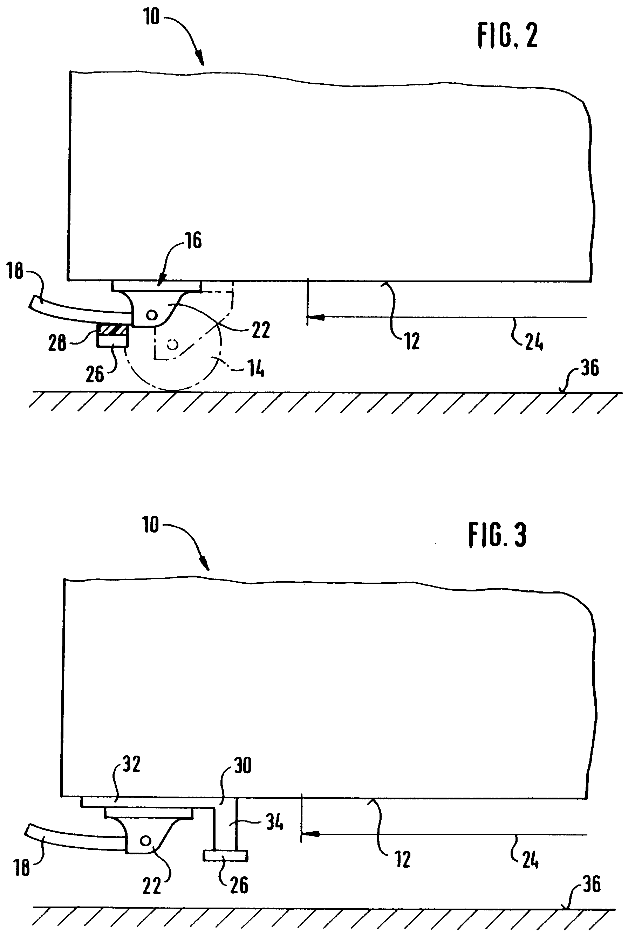

Fig. 2 zeigt in einer Teil-Seitenansicht einen Rollwagen 10 gemäß einem anderen Ausführungsbeispiel der Erfindung, bei welchem die Bremsvorrichtung 16 in üblicher Weise aus Metall besteht. Vergleichbar mit Fig. 1 ist auch hier der Transponder an dem metallenen Pedal 18 befestigt, und zwar über ein aus Kunststoff bestehendes Zwischenteil 28. Auch bei diesem Ausführungsbeispiel ist der Transponder 26 im Abstand vom Boden 12 außerhalb des Auflagebereiches 24 angeordnet, wodurch sich die Entfernung vom Transponder 26 zum Fußboden 36 verringert, in welchem die nicht dargestellte Antenne eines Lesegerätes verlegt ist. Da das Gehäuse des Transponders 26 aus Kunststoff besteht, kann gegebenenfalls sogar auf das Zwischenteil 28 verzichtet werden, denn da der Transponder 26 an dem Pedal 18 befestigt ist, befindet er sich noch immer im Abstand vom Boden 12 des Rollwagens 10.

Fig. 3 zeigt ein weiteres Ausführungsbeispiel der Erfindung, wobei der besseren Übersichtlichkeit wegen die Laufrollen 14 nicht dargestellt sind.

Der aus Kunststoff bestehende Abstandshalter wird durch einen Winkel 30 mit einem Basisschenkel 32 und einem sich von dem Boden 12 weg erstreckenden Halteschenkel 34 gebildet. Mit dem Basisschenkel 32 ist der Abstandshalter am Boden 12 befestigt, und auf dem Basisschenkel 32 ist die aus Kunststoff bestehende Bremsvorrichtung 16 angeordnet. Am unteren Ende des Halteschenkels 34 ist der Transponder 26 angeordnet, der sich somit im Abstand vom Boden 12 des Rollwagens 10 und außerhalb des Auflagebereiches 24 befindet.

Es ist auch denkbar, den Winkel 30 mit der Bremsvorrichtung 16 zu integrieren, indem der Basisschenkel als Bestandteil der Bremsvorrichtung ausgebildet wird und sich der Halteschenkel 34 direkt von der Bremsvorrichtung 16 aus nach unten hin erstreckt.

## Patentansprüche

1. Rollwagen (10), bestehend aus einem Behälter, bei welchem zumindest der Boden (12) aus Metall besteht, an dem Laufrollen (14) sowie mindestens eine Bremsvorrichtung (16) vorgesehen sind, wobei der Boden (12) zwischen den auf gegenüberliegenden Seiten befindlichen Laufrollen (14) einen Auflagebereich (24) zum Aufsetzen des Rollwagens (10) auf ein Transportband aufweist, und mit einem unten am Rollwagen (10) angeordneten Transponder (26), **dadurch gekennzeichnet**, daß der Transponder (26) an einem Abstandshalter (16; 28; 30) aus Kunststoff im Abstand vom Boden (12) des Rollwagens (10) befestigt ist, und daß sich der Transponder (26) außerhalb des Auflagebereiches (24) des Bodens (12) des Rollwagens (10) befindet.

2. Rollwagen nach Anspruch 1, **dadurch gekennzeichnet**, daß der Abstandshalter (16; 30) selbst am Boden (12) des Rollwagens (10) befestigt ist.

3. Rollwagen nach Anspruch 1, **dadurch gekennzeichnet**, daß der Transponder (26) mit dem Abstandshalter (28) an der metallenen Bremsvorrichtung (16) befestigt ist.

4. Rollwagen nach Anspruch 3, **dadurch gekennzeichnet**, daß die Bremsvorrichtung (16) zwei Pedale (18, 20) umfaßt, und daß der Transponder (26) an einem Pedal (18; 20) befestigt ist.

5. Rollwagen nach Anspruch 3, **dadurch gekennzeichnet**, daß die Bremsvorrichtung (16) zwei Pedale (18, 20) umfaßt, die an einer am Boden (12) des Rollwagens (10) befestigten Halterung (22) angeordnet sind, und daß der Transponder (26) an der Halterung (22) befestigt ist.

6. Rollwagen nach Anspruch 1, **dadurch gekennzeichnet**, daß der Abstandshalter aus Kunststoff durch die Bremsvorrichtung (16) des Rollwagens (10) gebildet ist.

7. Rollwagen nach Anspruch 6, **dadurch gekennzeichnet**, daß die aus Kunststoff bestehende Bremsvorrichtung (16) zwei Pedale (18, 20) umfaßt, und daß der Transponder (26) an einem Pedal (18; 20) befestigt ist.

8. Rollwagen nach Anspruch 6, **dadurch gekennzeichnet**, daß die aus Kunststoff bestehende Bremsvorrichtung (16) zwei Pedale (18, 20) umfaßt, die an einer am Boden (12) des Rollwagens (10) befestigten Halterung (22) angeordnet sind, und daß der Transponder (26) an der Halterung befestigt ist.

9. Rollwagen nach einem der vorhergehenden Ansprüche 1 - 8, **dadurch gekennzeichnet**, daß der Transponder als runde Scheibe ausgebildet ist.

10. Rollwagen nach einem der vorhergehenden Ansprüche 1 - 9, **dadurch gekennzeichnet**, daß in dem Abstandshalter bzw. in dem Pedal (18, 20) oder der Halterung (22) eine Öffnung vorgesehen ist, in der sich die elektrischen Komponenten des Transponders (26) befinden, und daß die Öffnung mit einer Vergußmasse vergossen ist.

11. Rollwagen nach Anspruch 2, **dadurch gekennzeichnet**, daß der Abstandshalter aus einem Winkel (30) mit einem unlösbar mit dem Boden (12) des Rollwagens (10) verbundenen Basisschenkel (32) und mit einem sich vom Boden (12) weg erstreckenden Halteschenkel (34) besteht, an dessen äußerem Ende der Transponder (26) befestigt ist.

12. Rollwagen nach Anspruch 11, **dadurch gekennzeichnet**, daß der Basisschenkel (32) als Platte ausgebildet ist, und daß die Bremsvorrichtung (16) mit ihrer Halterung (22) an dem Basisschenkel (32) befestigt ist.
